# EUROPÄISCHE PATENTSCHRIFT

(11) **EP 1 653 782 B1**
(45) Veröffentlichungstag und Bekanntmachung des Hinweises auf die Patenterteilung: **09.09.2009**
(21) Anmeldenummer: 05076021.4
(22) Anmeldetag: 02.05.2005
(51) Int. Cl.: H05B 33/08, B60Q 11/00, B60Q 1/30

(54) **Led Kontrollgerät für Fahrzeugleuchten**
LED control device for vehicle lamps
Dispositif de contrôle de LEDs pour feux de véhicule

(30) Priorität: 04.05.2004 DE 102004022303
(43) Veröffentlichungstag der Anmeldung: 03.05.2006
(73) Patentinhaber: ASPÖCK Systems GmbH, 4722 Peuerbach (AT)
(72) Erfinder: Klaffenböck, Martin, 4722 Peuerbach (AT)
(74) Vertreter: Faul, Claus-Peter

(56) Entgegenhaltungen:
- EP-A- 1 458 222
- DE-A1- 10 107 578
- DE-C1- 10 215 486
- DE-C1- 19 708 659

## Beschreibung

Die vorliegende Erfindung betrifft ein LED Kontrollgerät für Fahrzeugleuchten, insbesondere eine Blinkerwiderstandschaltung.

In Fahrzeugleuchten werden immer häufiger statt Glühlampen Luminiszenzdioden, so genannte LEDs (light emitting diodes) verwendet. Bei großen Fahrzeugen oder aus Zugmaschine und Anhänger oder Auflieger bestehenden Gespannen kommt es vielfach zu einem Mischbetrieb, das heißt die gleiche Lichtsignalfunktion wird an verschiedenen Stellen sowohl von Glühlampen als auch von LEDs dargestellt, die zusammengeschaltet sind. Es kann beispielsweise vorkommen, dass eine Zugmaschine noch mit konventionellen Glühlampen ausgestattet ist, während die wechselnden Anhänger oder Auflieger schon mit modernen LEDs ausgerüstet sind. Aber auch bei einem Einzelfahrzeug können beide Arten von Leuchtmittel nebeneinander betrieben werden müssen. Dies gilt beispielsweise für Blinkerschaltungen. Die Anpassung erfolgt durch eine Blinkerwiderstandssteuerung. Zugleich soll eine Überwachung der Licht emittierenden Signalmittel erfolgen.

LEDs haben zwar eine lange Betriebsdauer, aber auch bei diesen Leuchtmitteln nimmt nach sehr langer Brenndauer die Lichtabgabe ab, obwohl die Stromaufnahme nicht abnimmt. Deshalb wird für diesen Fall in der DE 197 54 222 sinnvollerweise vorgeschlagen die Lichtabgabe optisch zu überwachen. Bei der gegenüber Glühlampen jedoch wesentlich größeren Lebensdauer ist dieser Weg für die Praxis zu aufwendig und deshalb auch nicht zweckmäßig.

In der DE 198 52 351 A1 wird eine Diagnoseschaltung offenbart, bei der die Stromaufnahme einer LED Leuchte mittels einer schaltbaren Stromsenke in Abhängigkeit von der Art des aufgetretenen Fehlers ein Spannungssignal erzeugt, das in einer weiteren Schaltung ausgewertet wird. Hier ist der Schaltungs- und Kabelaufwand immer noch sehr hoch.

Gemäß DE 102 47 677 A1 wird eine Leuchtdiode mit einer Glühlampe als Belastungswiderstand für die Leuchtdiode in Reihe geschaltet. In DE 201 15 409 U1 ist ein Flächenfolienwiderstand als Vorwiderstand beschrieben. Die darüber hinaus in dieser Schrift offenbarte Schaltung ist geeignet, eine Steuer- und Überwachungsschaltung zum Ansteuern und Überwachen von Blinklasten mit geringer Stromaufnahme an Blinklasten mit hoher Stromaufnahme anzupassen. Das ist für eine Blinkerschaltung zum Steuern von verschieden bestückten Leuchten geeignet. Allerdings ist der Schaltungsaufwand hoch und es werden zusätzliche Leitungen benötigt. Aber die Schaltung versagt, wenn die Blinkschaltung als Warnleuchte durch gleichzeitiges Einschalten von rechten und linken Blinkern betätigt wird Diese Schaltmöglichkeit ist heute Vorschrift.

Gegenstand der DE 102 15 486 C1 ist eine Beleuchtungseinrichtung für Fahrzeuge, bei der zwei kostspielige Elektroniken notwendig sind, da in der Leuchte ein Impulserzeuger integriert ist; der Impuls wird von einer Strommessschaltung und einer Steuer- und Überwachungsschaltung erkannt; in entsprechender Weise reagiert das Vorschaltgerät mit oder ohne Glühlampen-Simulation.

Bei einer aus DE 101 07 578 A1 bekannten Lichtanlage für Kraftfahrzeuge wird in einem Zeitfenster eine Last zugeschaltet, um eine Glühlampe zu simulieren. Der Nachteil dieses Systems besteht darin, dass alle Zugfahrzeuge auf dieses Zeitfenster abgestimmt sein und zu diesem Zeitpunkt die Kontrollmessungen durchführen müssen.

Schließlich hat die aus DE 197 08 659 C1 bekannte Blinklichtsignalanlage für Kraftfahrzeuge eine externe Kontrollschaltung zur Funktionskontrolle der Leuchtdiode, die bei einem Defekt einer LED alle anderen Leuchtdioden abschaltet. Eine Simulation einer Glühlampe ist nicht vorgesehen.

In Anknüpfung an den oben erläuterten Stand der Technik ist im vorliegenden Fall die Aufgabe der Blinkerwiderstandsteuerung, gleichfalls eine Anpassung der elektrischen Eigenschaften von LED Heckleuchten an die Eigenschaften konventioneller, das heißt mit normalen Glühlampen bestückter Leuchten vorzunehmen

Die Lösung ist den Patentansprüchen zu entnehmen.

Nachstehend wird beispielhaft eine praktische Ausführung für eine Blinkerschaltung an Hand eines Vorschaltgerätes für eine am Heck eines Sattelzuges oder eines LKW-Hängers angeordnete Kombileuchtenanordnung beschrieben, in der neben den Leuchtmitteln für den Blinker auch die wesentlichen anderen Signalleuchten untergebracht sind.

Aus folgenden beispielhaften Gründen kann diese Anpassung in der Praxis notwendig sein:
- Die Blinkerkontrollleuchte der Zugmaschinen arbeitet nur in Verbindung einer 21W Glühlampe.
- Die Anhängererkennung vieler Zugmaschinen arbeitet mit Testspannungen am Blinker, welche gegen Masse gezogen werden muss.
- Moderne Zugmaschinen kontrollieren zusätzlich zur Funkion des Blinkers mindestens noch die Funkion des Stand- und der Bremslichtes. Wird von diesen Funktionen zu wenig Leistung aufgenommen, werden diese Funktionen in der Zugmaschine als fehlerhaft angezeigt.

Zur Erfüllung der gesetzlichen Auflagen darf die Leistung des Blinkers der LED Leuchte nur erhöht werden, wenn dieser auch funktioniert. Das wird durch eine Strommessung der Blinkerfunktion überwacht.

Zusätzlich zur Erhöhung der von Blinker, Stand- und Bremslicht aufgenommenen Leistung muss auch noch der Eingangwiderstand der Blinkerfunktion verringert werden, wenn der Blinker nicht eingeschaltet ist. Das wird durch ein Schaltelement, beispielsweise ein Relais ermöglicht, welches allerdings nach dem Einschalten des Blinkers umgeschaltet werden muss, um die thermische Zerstörung zu verhindern.

Die zusätzliche Leistung für den Blinker wird durch eine Konstantstromregelung aufgenommen. Für die Leistungserhöhung von Stand- und Bremslicht sind zwei Widerstände vorgesehen.

Die Blinkerwiderstandssteuerung ist als Vorschaltgerät ausgebildet. Es wird also vor der Leuchte angeschlossen. Somit ist kein Eingriff in eine bestehende Leuchte notwendig. Am Eingang der Blinkerwiderstandssteuerung wird die Versorgungsspannung vom Zugfahrzeug angeschlossen. Der Ausgang der Blinkerwiderstandssteuerung wird an der Leuchte angeschlossen.

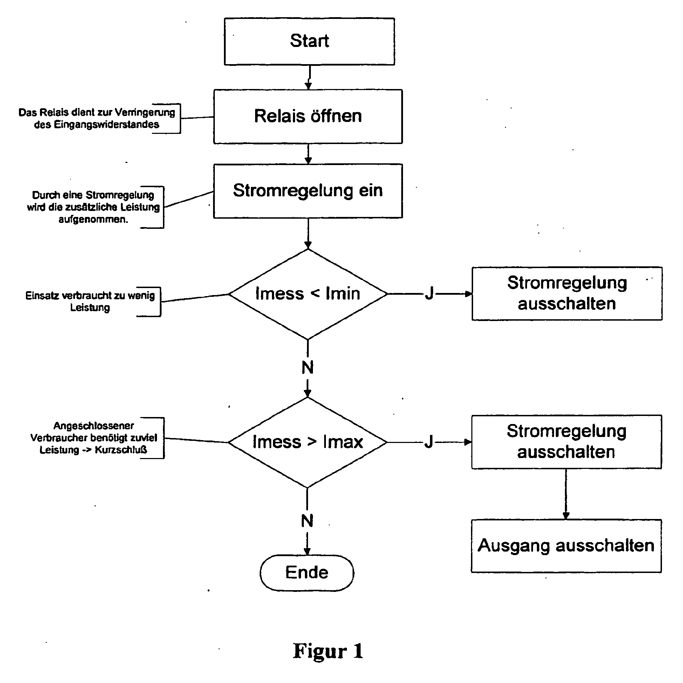

Das in Figur 1 dargestellte Flussdiagramm erklärt die Funktionsweise der Blinkerwiderstandssteuerung:
Beim Start wird eine Betriebsspannung, beispielsweise 24V, am Blinkereingang 1 der Blinkerwiderstandssteuerung angeschlossen. Dann öffnet ein Relais (vgl. Figur 1). Dadurch erhöht sich der Eingangswiderstand, um eine thermische Zerstörung zu verhindern.

Es setzt eine Stromregelung ein: Der von der Blinkerfunktion aufgenommene Strom wird in der Blinkerwiderstandssteuerung durch eine Konstantstromregelung auf den Wert einer Glühlampe angeglichen.

Durch eine Strommessung (3) wird der vom Blinker aufgenommene Strom gemessen (Imess) und mit einem Mindestwert (Imin) verglichen. Liegt der Wert des gemessenen Stromes unter der Mindestgrenze, so ist der Blinker ausgefallen und es darf auch keine zusätzliche Leistung aufgenommen werden. Die Stromregelung und der Ausgang 4 werden ausgeschaltet.
Liegt der Wert der gemessenen Stromes (Imess) über einem Maximalwert (Imax), so ist ein Kurzschluss am Blinker vorhanden. In diesem Fall werden die Stromregelung 8 und der Ausgang 4 der Blinkerwiderstandssteuerung abgeschaltet. Somit kann durch den sonst fließenden Kurzschlussstrom keine Brandgefahr mehr ausgehen, und dem Fahrerhaus der Zugmaschine wird durch den fehlenden Strom der Ausfall des Blinkers signalisiert.

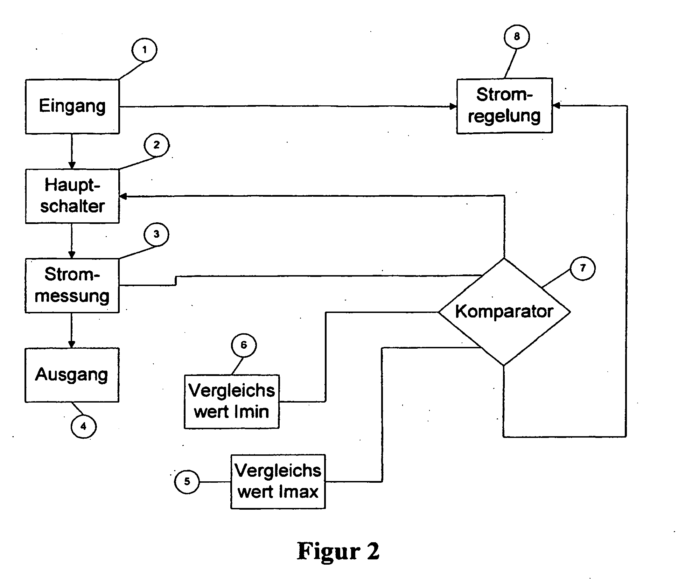

Die Schaltung ist entsprechend dem in Figur 2 wiedergebenden Blockschaltbild aufgebaut. Hierin bedeuten:
1. **Eingang**: 7poliger Anschluss zur Zugmaschine
2. **Hauptschalter**: Dieser schaltet den Ausgang zum Blinker. Er wird anfangs eingeschaltet und bei Kurzschluss des Blinkers durch den Komparator ausgeschaltet.
3. **Strommessung**: Durch diese wird der vom Blinker benötigte Strom gemessen.
4. **Ausgang**: 7poliger Anschluss zur Heckleuchte
5. **Vergleichswert Imax:** Durch diesen Schaltungsblock wird der maximal erlaubte Strom, welchen der Blinker benötigen darf, eingestellt.
6. **Vergleichswert Imin**: Durch diesen Schaltungsblock wird der Mindeststrom eingestellt, welcher vom Blinker benötigt werden muss.
7. **Komparator**: Dieser Schaltungsteil vergleicht den gemessenen Strom mit den eingestellten Grenzwerten:
   a wird zuviel Strom vom Blinker benötigt, so schaltet der Komparator den Hauptschalter und die Stromregelung aus;
   b wird zuwenig Strom benötigt, so schaltet der Komparator die Stromregelung aus.
8. **Stromregelung**: Durch diese wird die zusätzlich benötigte Leistung aufgenommen. Diese fängt direkt nach dem Einschalten zur arbeiten an, bis sie im Fehlerfall vom Komparator 7 ausgeschaltet wird. Durch eine spezielle Beschaltung wird beim Einschalten die Einschaltstromspitze einer Glühlampe nachgebildet.

## Patentansprüche

1. LED Kontrollgerät für Fahrzeugleuchten, insbesondere Blinkerwiderstandschaltung zur Anpassung von mit Glühlampen bestückten Blinkereinrichtungen an mit Lumineszenzdioden (LEDs) bestückten Blinkereinrichtungen an Zugmaschinen, Anhängern oder Aufliegern, **dadurch gekennzeichnet, dass** eine Blinkerwiderstandssteuerung als Vorschaltgerät vor der Fahrzeugleuchte und mit ihrem Eingang an die Versorgungsspannung vom Zugfahrzeug anschließbar ist und eine Strommessschaltung (3) aufweist, die mit einem Komparator (7) für den Vergleich des von der Fahrzeugleuchte aufgenommenen Stroms (Imess) mit zwei eingestellten Grenzwerten (Imax, Imin) verbunden ist, wobei der Ausgang des Komparators (7) an einen zur Strommessschaltung (3) führenden Hauptschalter (2) sowie an eine Konstantstrom-Regelungsschaltung (8) angeschlossen ist, in der beim Einschalten der Fahrzeugleuchte der Strom einer Glühlampe simuliert wird.

2. Verfahren zur Steuerung des LED-Kontrollgerätes nach Anspruch 1, **dadurch gekennzeichnet, dass** beim Start eine Betriebsspannung am Blinkereingang der Blinkerwiderstandssteuerung angelegt ist, die durch Öffnung eines Schaltelements einen Eingangswiderstand ausschaltet, um eine thermische Zerstörung zu verhindern, worauf der von der Blinkerfunktion aufgenommene Strom in der Blinkerwiderstandssteuerung durch eine Konstantstromregelung auf den Wert einer Glühlampe angeglichen und durch eine Strommessung der vom Blinker aufgenommene Strom gemessen (Imess) und mit einem Mindestwert (Imin) und einem Maximalwert (Imax) verglichen wird, und dass diese Stromregelung und der Ausgang ausgeschaltet werden, sobald der Wert des gemessenen Stromes (Imess) unter der Mindestgrenze (Imin) oder über dem Maximalwert (Imax) liegt.

## Claims

1. LED monitoring device for vehicle lamps, particularly a flasher resistive unit to adapt in traction engines, trailers or semi-trailers flashing apparatuses with bulb equipment to flashing apparatuses provided with light-emitting diodes (LED), **characterized in that** a flasher resistive control unit acting as ballast is used to be connected upstream of said vehicle lamp such that its input is connected to the supply voltage of the traction engine, said control unit comprising a current-measuring circuit (3) connected with a comparator (7) for comparing the current (Imess) consumed by the vehicle lamp with two preset limit values (Imax, Imin), the output terminal of said comparator (7) being connected with a main switch (2) leading to said current-measuring circuit (3) and with a constant-current control circuit (8) simulating a bulb current when said vehicle lamp is switched on.

2. Method for controlling the LED monitoring device according to claim 1, **characterized in that**, when starting, an operating voltage is fed to the flashing input of said flasher resistive control unit which opens a switch element to disconnect an input resistor, such that a thermal destruction is prevented, wherein subsequently the current consumed by the flasher function is adapted in said flasher resistive control unit and through a constant-current control to a bulb current value, the current (Imess) consumed by said flasher being compared with a minimum current (Imin) and a maximum current (Imax), and wherein said current control and said output are turned off as soon as the value of the measured current (Imess) is below that of the minimum value (Imin) or higher than the maximum value (Imax).

## Revendications

1. Dispositif de contrôle de LEDs pour feux de véhicules, particulièrement circuit de résistances de clignotants pour adapter des dispositifs de clignotant équipés de lampes à incandescence à des dispositifs de clignotants équipés de diodes luminescentes (LED) sur des véhicules tracteurs, remorques ou semi-remorques, **caractérisé par le fait qu'**une centrale de commande de clignotant servant de ballast est placée en amont des feux du véhicule et apte à être reliée à son entrée à la tension d'alimentation du véhicule tracteur et présente un circuit de mesure de courant (3) relié à un comparateur (7) pour comparer le courant consommé (Imess) par le feu de véhicule avec deux valeurs limites réglées (Imax, Imin), la sortie du comparateur (7) étant reliée à un interrupteur principal (2) sur le circuit de mesure de courant (3) et à un circuit de régulation de courant constant (8) ledit circuit (8) simulant le courant d'une lampe à incandescence au moment de la mise en circuit du feu de véhicule.

2. Procédé pour commander le dispositif de contrôle de LEDs selon la revendication 1 **caractérisé par le fait qu'**au moment de la mise en circuit une tension de service est appliquée à l'entrée du clignotant du circuit de résistances de clignotants, ladite tension de service coupe, par un élément d'interruption, une résistance d'entrée pour éviter un claquage thermique, après quoi le courant consommé par le clignotant dans le circuit de résistances de clignotants est adapté à la valeur d'une lampe à incandescence par une régulation de courant constant et le courant consommé (Imess) par le clignotant est mesuré et comparé à une valeur minimum (Imin) et à une valeur maximum (Imax), et **par le fait que** ladite régulation du courant et la sortie sont coupées dès que la valeur du courant mesuré (Imess) se situe sous la valeur minimum (Imin) ou au-dessus de la valeur maximum (Imax).
